# EUROPEAN PATENT SPECIFICATION

(11) **EP 2 644 178 B1**
(45) Date of publication and mention of the grant of the patent: **21.01.2015**
(21) Application number: 10859889.7
(22) Date of filing: 25.11.2010
(51) Int. Cl.: A61H 3/00, A61H 1/02, H01M 10/48, B25J 19/00, B25J 9/00, H01M 6/50

(54) **WALKING ASSISTANCE DEVICE**
GEHHILFEVORRICHTUNG
DISPOSITIF D'AIDE À LA MARCHE

(43) Date of publication of application: 02.10.2013
(73) Proprietor: Toyota Jidosha Kabushiki Kaisha, Toyota-shi, Aichi 471-8571 (JP)
(72) Inventor: KONISHI Kenta, Toyota-shi Aichi 471-8571 (JP)
(74) Representative: Albutt, Anthony John
(86) International application number: PCT/JP2010/070976
(87) International publication number: WO 2012/070134

(56) References cited:
- EP-A1- 2 070 492
- WO-A2-2009/082249
- JP-A- 2005 329 492
- JP-A- 2010 124 934
- JP-B2- 4 178 187

## Description

### TECHNICAL FIELD

The present invention relates to a wearable walking assist device that assists a user in walking.

### BACKGROUND ART

A wearable walking assist device is being developed. This type of walking assist device is attached to a user's leg. An actuator of the walking assist device applies torque on a joint of the user's leg in response to walking action. In the following description, the wearable walking assist device may be simply referred to as an "assist device". It is preferable that the wearable walking assist device does not restrict user's range of activity. Therefore, the assist device has a battery that supplies electric power to the actuator.

Usable life of the assist device is determined by duration of the battery. That is, it is important to make efficient use of the battery. For example, patent document 1 discloses one technique to use a battery efficiently. Patent document 1 refers to the technique to restrict an output of an actuator when an amount of charge of the battery (SOC: State Of Charge) decreases.

Patent Document 1: Japanese Patent Application Publication No. 2010-124934

WO 2009/082249 discloses a walking assist device for assisting a user, the walking assist device comprising a leg attachment in use attached to a wearing leg of the user, and having an actuator for applying torque on a joint of the wearing leg, a first and a second battery configured to supply electric power to the actuator, and a controller configured to change a power source of the actuator from the first battery to the second battery.

### SUMMARY OF INVENTION

Aspects of the invention are defined in the appended claims.

### Technical Problem

As the technique in patent document 1 discloses, restricting the output of the actuator leads to restricting a capability of the walking assist device. It is not preferable to restrict the capability of the walking assist device.

Therefore, as another technique to make efficient use of a battery, the inventor of the present application considered a technique to change a battery to be used among a plurality of batteries. In the case of changing the battery to be used among the plurality of batteries, electric power supplied to an actuator decreases momentarily upon changing the battery, though this moment is very short.

On the other hand, the assist device supports a weight of a user or assists swinging a leg of the user by applying torque on a joint of the leg of the user. There is a possibility that the actuator fails to apply sufficient torque to support the weight of the user in a case that electric power supplied for the actuator decreases while the walking assist device is supporting the weight of the user. That is, in this case, a capability to assist walking decreases, though it is only temporarily. The technique which the present description discloses provides a walking assist device that is able to change the battery without decreasing the capability of assisting in walking.

### Solution to Technical Problem

According to the invention, a device as defined in claim 1 is provided.

A walking motion is a motion of repeating a standing phase and an idling phase. An actuator is required to provide large torque during a period in which the assist device supports a weight of a user. Especially large torque is required during a period in which only the leg to which the walking assist device is attached supports the weight of the user (a one leg standing period). That is, large electric power is required during the one leg standing period of the leg to which the walking assist device is attached. In other words, during a period other than the one leg standing period of the leg to which the walking assist device is attached, an output which the actuator is required to provide (a required output) is not very high compared with the output required during the one leg standing period. If a battery can be changed during a period in which the required output is not high, there is a high possibility that the actuator can provide the required output even if the electric power temporarily decreases. That is, the temporary decrease in electric power does not effect the capability to assist walking. The technique which the present description discloses makes it possible that the temporary decrease in the electric power supplied to the actuator does not cause the walking assist device to decrease the capability thereof upon changing the battery during the period other than the one leg standing period of the leg to which the assist device is attached.

The period other than the one leg standing period of one leg (the leg to which the assist device is attached) corresponds to a period in which the other leg is making contact with ground. The assist device according to the present invention has a leg attachment. The leg attachment is attached to one leg of the user and applies torque on the joint of one leg of the user in response to walking action. Furthermore, the assist device has a plurality of batteries for supplying electric power to the actuator. A controller of the assist device changes a power source of the actuator from a first battery to a second battery while the other leg is making contact with the ground. The "period in which the other leg is making contact with the ground" corresponds to the "period other than the one leg standing period of one leg (the leg to which the leg attachment is attached)". In the following description, the one leg to which the leg attachment is attached is referred to as a "wearing leg" and the other leg (a leg to which the leg attachment is not attached) is referred to as a "sound leg".

The above assist device changes the battery during "the period other than the one leg standing period of the wearing leg", that is, a period in which the actuator is not required a large load. Thus, the assist device can maintain a sufficient output for assisting walking even if the supplied electric power temporarily decreases. That is, the assist device does not effect the capability to assist walking even if the supplied electric power temporarily decreases.

For example, the "period in which the sound leg is making contact with the ground" can be detected by a ground contact sensor which is placed at a sole of the sound leg. Alternatively, since the walking action can be expressed by a changing pattern of an angle of a joint of a leg, the " period in which the other leg is making contact with the ground" can be estimated by the changing pattern. That is, the controller of the assist device may estimate the "period in which the other leg is making contact with the ground" by data of an angle sensor which measures the angle of the joint of the leg.

The "period in which the sound leg is making contact with the ground" includes a both legs standing period and the one leg standing period of the sound leg. The one leg standing period of the sound leg corresponds to an idling leg period of the wearing leg. It is preferable that the leg attachment has the ground contact sensor and the controller is configured to change the battery during the idling leg period of the wearing leg. The "idling leg period of the wearing leg" is a part of the "period in which the sound leg is making contact with the ground". In the idling leg period of the wearing leg, large torque is not required because the assist device does not have to support the weight of the user. Therefore, the idling leg period of the wearing leg is a favorable period to change the battery.

The first battery and the second battery may be physically independent from each other. Alternatively, the first battery and the second battery may constitute a battery cell group, a part of which can be shared in common as described below. That is, the first battery may be composed of a plurality of battery cells being connected, and the second battery may correspond to a battery in which at least one battery cell is electrically separated from the first battery. When one battery is composed of a plurality of connected battery cells, a compact battery with good performance can be realized. On the other hand, as for the battery composed of the plurality of battery cells, malfunction of one battery cell can cause an output voltage of the whole battery to decrease. Thus, the battery composed of the plurality of battery cells can be used efficiently if the battery is configured capable of electrically separating the battery cell with malfunction. That is, it is preferable that the controller of the assist device is configured to electrically separate the battery cell with malfunction from the battery composed of the plurality of connected battery cells (the first battery) while the sound leg (the other leg mentioned earlier) is making contact with the ground. The battery in which the battery cell with malfunction is electrically separated corresponds to the second battery.

It is further preferable that the above assist device has a third battery which compensates for a temporary voltage decrease upon changing a battery. The third battery is independent from the first battery and the second battery. A capacity of the third battery can be smaller than a capacity of the first battery, since the third battery simply compensates for the temporary voltage decrease. In this case, the controller connects the third battery to the actuator as one of power sources while the power source of the actuator is changed from the first battery to the second battery. A small size battery (the third battery) compensates for the temporary voltage decrease, and supplies a sufficient electric power to the actuator.

Specific processes of the controller may be as follows. In a case of the assist device having the third battery, the controller first connects the third battery in parallel with the first battery. Next, the controller changes the first battery to the second battery. Lastly, the controller electrically separates the third battery. According to the above procedures, the third battery supplies electric power for the actuator while changing the first battery to the second battery.

As described above, the wearable walking assist device which the present description discloses makes it possible to use batteries efficiently by changing the battery to be used among the plurality of batteries. Also, the wearable walking assist device of the present description does not influence the capability to assist walking even if the voltage temporarily decreases when changing the battery.

### BRIEF DESCRIPTION OF DRAWINGS

FIG. 1 shows a schematic perspective view of a walking assist device.
FIG. 2 shows a block diagram of the walking assist device.
FIG. 3 shows a flow chart of processes executed by a controller.
FIG. 4 shows a block diagram of a walking assist device in a second embodiment.
FIG. 5 shows a flow chart of processes executed by a controller in the second embodiment.

### DESCRIPTION OF EMBODIMENTS

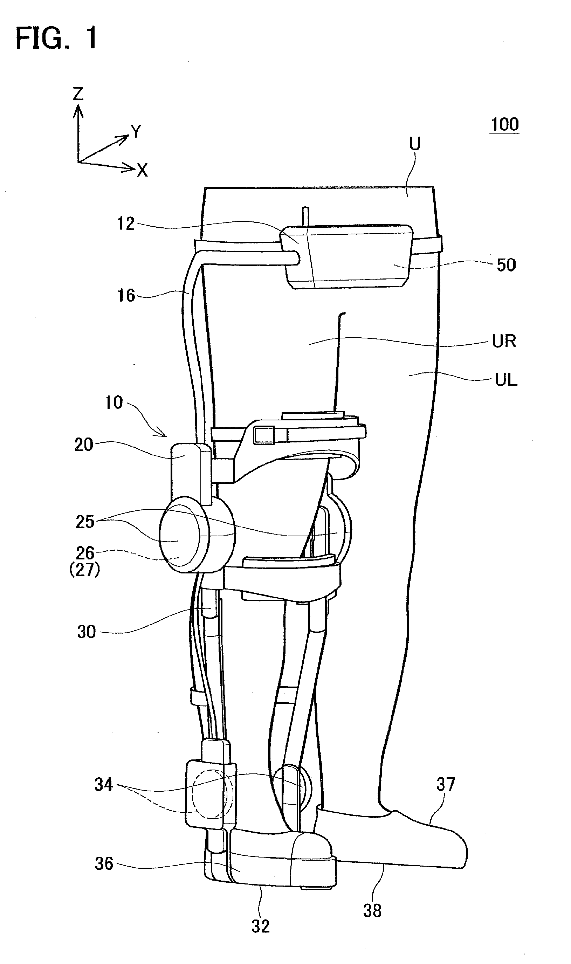

FIG. 1 shows a schematic view of a walking assist device 100 in a first embodiment. The waling assist device 100 mainly comprises a leg attachment 10 which is attached to a right leg (UR) of a user U and a controller 12 which controls the leg attachment 10. Note that the controller 12 has a built-in battery 50. In the present embodiment, assume that the user U is a patient whose left leg UL is sound but right leg UR is impossible to move freely. Since the left leg UL is sound, the leg attachment 10 is attached only to the right leg UR. The right leg UR corresponds to a wearing leg, and the left leg UL corresponds to a sound leg.

A coordinate system will be described before describing the walking assist device 100. As shown in FIG. 1, an x-axis is set in a forward direction of the user U, a y-axis is set in a lateral direction of the user U, and a z-axis is set in a vertically upward direction. In general, in a technical field of robots, an axis (x-axis) extending in a front-back direction of a robot (a human body) is referred to as a roll axis, and an axis (y-axis) extending in the lateral direction of the robot (the human body) is referred to as a pitch axis, and an axis (z-axis) extending in the vertically upward direction is referred to as a yaw axis.

The structure of the leg attachment 10 will be explained. The leg attachment 10 comprises an upper leg link 20, a lower leg link 30, and a foot link 36. The upper leg link 20 is attached to a thigh of the user, the lower leg link 30 is attached to a lower leg of the user, and the foot link 36 is attached to a foot of the user.

The upper leg link 20 and the lower leg link 30 are connected at both sides of a right knee joint of the user. In more detail, the upper leg link 20 and the lower leg link 30 are mutually connected in a rotatable manner by a pair of first joints 25 positioned coaxially with the knee joint of the user. The outside first joint 25 has a motor 26 and an angle sensor 27 built therein. The motor 26 swings the lower leg link 30 around the pitch axis of the knee. In the following description, an angle between the upper leg link 20 and the lower leg link 30 is referred to as a knee angle. An angle which the angle sensor 27 measures is a swing angle of the lower leg link 30 with respect to the upper leg link 20. The angle which the angle sensor 27 measures also corresponds to the knee angle between the user's upper leg and lower leg.

The lower leg link 30 and the foot link 36 are connected at both sides of an ankle joint of the user. In more detail, the lower leg link 30 and the foot link 36 are mutually connected in a rotatable manner by a pair of second joints 34 positioned coaxially with the pitch axis of the ankle joint of the user. The second joints 34 do not have an actuator. The foot link 36 swings passively in response to swinging of the right foot of the user U. A ground contact sensor 32 is placed at a sole of the foot of the foot link 36. The ground contact sensor 32 detects whether the right leg UR is making contact with ground or not.

A shoe 37 which is one of components of the assist device 100 is worn on a left foot of the user. At a sole of the shoe 37, a ground contact sensor 38 is placed which detects whether the left leg is making contact with the ground or not.

The controller 12 is attached to a waist of the user U with a belt. The controller 12 has a small size computer and the battery 50 built therein. The controller 12 supplies electric power for each part of the leg attachment 10 via a cable 16, and controls action of each part of the leg attachment 10. The controller 12 controls the motor 26 based on sensor data of the angle sensor 27 and the ground contact sensors 32 and 38. The motor 26 applies torque on the right knee joint so that the lower leg of the right leg properly swings in response to walking action of the user. For example, when a timing of the right leg taking off the ground is detected, the controller 12 controls the motor 26 so that the lower leg link 30 swings in accordance with a predetermined target pattern. Detailed description regarding an algorithm for controlling the motor in response to the walking action will be omitted.

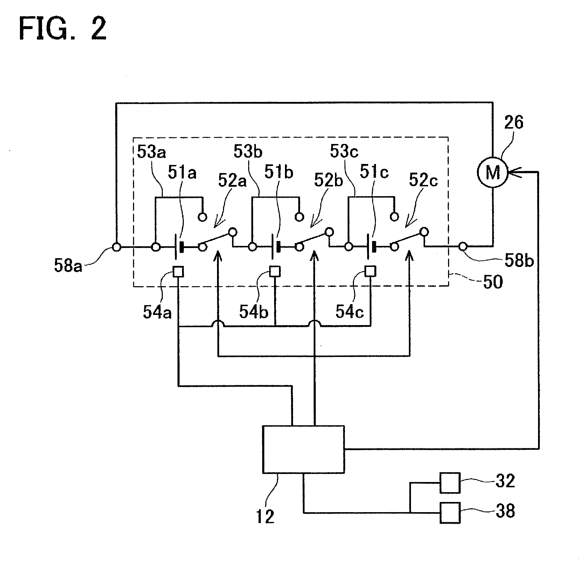

FIG. 2 shows a block diagram of the walking assist device 100, especially, a block diagram of an inside of the battery 50. The battery 50 is configured of a plurality of battery cells connected in series. As shown in FIG. 2, the battery 50 is configured of three battery cells 51a, 51b, and 51c. The battery 50 may be configured of more than or equal to four battery cells.

Each battery cell has a switch. The battery cell 51a has a switch 52a. When the switch 52a is shifted, a bypass 53a becomes active and the battery cell 51a is electrically separated from other battery cells group. The battery cell 51b has a switch 52b, and the battery cell 51c has a switch 52c. When the switch 52b is shifted, a bypass 53b becomes active and the battery cell 51b is electrically separated from other battery cells group. When the switch 52c is shifted, a bypass 53c becomes active and the battery cell 51c is electrically separated from other battery cells group. The switch 52a, 52b, and 52c is controlled by the controller 12.

Each battery cell has an anomaly detector. The battery cell 51a has an anomaly detector 54a. The anomaly detector 54a detects, for example, a temperature of the battery cell 51a. In another embodiment, the anomaly detector 54a may detect a state of charge of the battery cell 51 a. Further, in the other embodiment, the anomaly detector 54a may be a detector for detecting an electrical leakage of the battery cell 51a. Alternatively, the anomaly detector 54a may be a detector for measuring an internal resistance of the battery cell 51a. Increase in the internal resistance indicates an anomaly of the battery cell 51 a. The anomaly detector 54a informs the controller 12 of an anomaly when the anomaly detector 54a detects that the battery cell 51a is in a different condition from a normal condition. Similarly, the battery cell 51b has an anomaly detector 54b for detecting an anomaly of the battery cell 51b, and the battery cell 51c has an anomaly detector 54c for detecting an anomaly of the battery cell 51c. The anomaly detector 54b and 54c are connected to the controller 12. The controller 12 detects an anomaly of each battery cell.

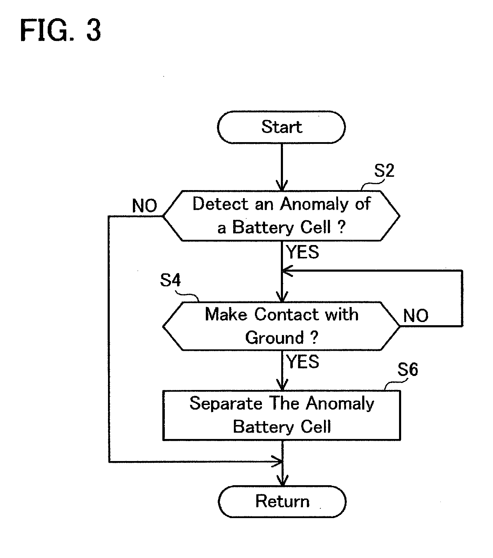

The motor 26 is connected to terminals 58a and 58b of the battery 50. That is, the battery 50 supplies electric power for the motor 26. When an anomaly of either battery cell is detected, the controller 12 electrically separates the anomaly battery cell from other battery cells. FIG. 3 shows a flow chart of battery management processes executed by the controller 12. The controller 12 monitors, based on sensor data of the anomaly detectors 54a, 54b, and 54c, whether there is any anomaly in the battery cells or not (S2). When an anomaly of either battery cell is detected (S2: YES), the controller 12 waits until the contact of the left leg UL with the ground is detected (S4: NO). When the contact of the left leg UL with the ground is detected (S4: YES), the controller 12 electrically separates the anomaly battery cell from other battery cells (S6). Specifically, the controller 12 shifts a switch of the anomaly battery cell, and activates a bypass of the anomaly battery cell. Processes shown in FIG. 3 are repeatedly executed at a constant period.

Regarding the above processes, note that the left leg UL is a leg to which the leg attachment 10 is not attached (the sound leg). That is, the controller 12 separates an anomaly battery cell while the sound leg makes contact with ground. In other words, the controller 12 separates the anomaly battery cell during a period except a one leg standing period of the right leg UR (the wearing leg) to which the leg attachment 10 is attached. In walking action, a load applied on the wearing leg is the largest during the one standing leg period. That is, the motor 26 is required to provide a high output torque during the one standing leg period of the wearing leg. This indicates that a large electric power is required during the one standing leg period of the wearing leg. On the other hand, in a case of changing the battery, the supplied electric power temporarily decreases at the moment of changing the battery. The assist device 100 changes the battery during the period other than the one standing leg period of the wearing leg. That is, when the user is walking, the assist device 100 does not change the battery during the period in which the large electric power is required. Therefore, the decrease in the output torque caused by changing the battery can be avoided.

Points to be noted regarding the assist device 100 will be remarked. The battery 50 before the anomaly battery cell is separated is different from the battery 50 after the anomaly battery cell is separated. The battery 50 before the anomaly battery cell is separated corresponds to the first battery, and the battery 50 after the anomaly battery cell is separated corresponds to the second battery. For example, assume a case where the battery cell 51b breaks down. In this case, the battery 50 composed of three battery cells 51a, 51b, and 51c corresponds to the first battery. And the battery 50 composed of two battery cells 51a and 51c with the battery cell 51b separated corresponds to the second battery. Note that the number of battery cells to be separated is not limited to one.

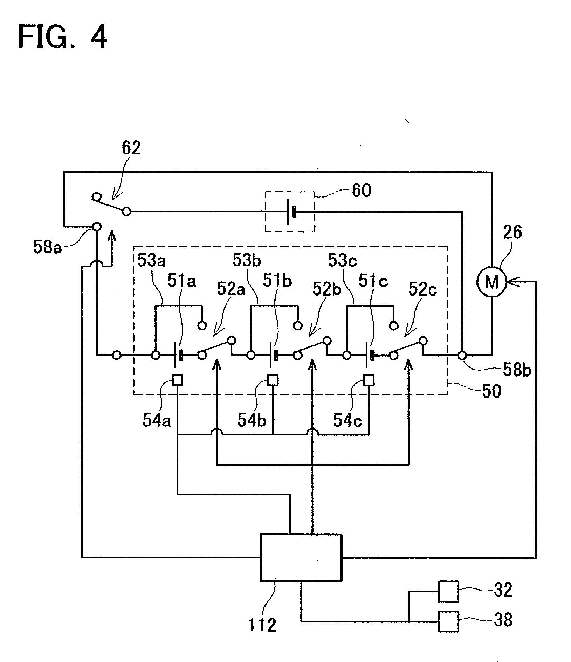

Next, an assist device in a second embodiment will be explained. The assist device in the second embodiment has the same structure as the assist device in the first embodiment except for a structure of batteries. FIG. 4 shows a block diagram of the battery of the assist device in the second embodiment. The assist device in the second embodiment comprises a sub battery 60 in addition to the battery 50. An output voltage of the sub battery 60 is almost the same as an output voltage of the battery 50. However, a charge capacity of the sub battery 60 is much smaller than a charge capacity of the battery 50. The sub battery 60 is prepared to compensate for a temporary voltage decrease at the moment of separating an anomaly battery cell.

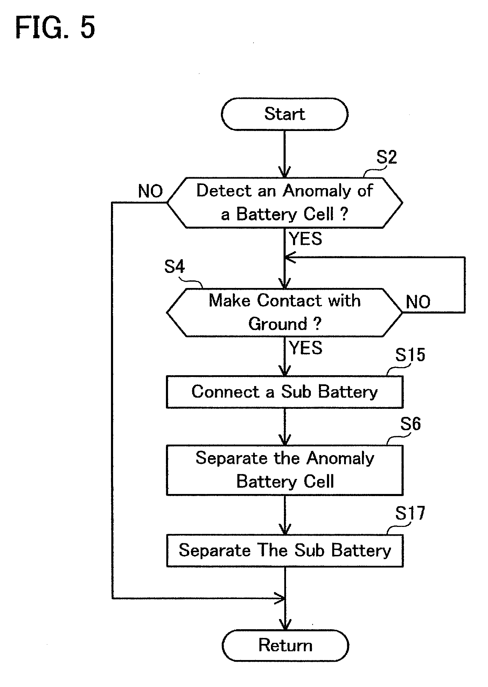

The structure of the battery 50 is the same as the structure in the first embodiment. The sub battery 60 is connected in parallel with the battery 50 with a switch 62. However, under normal conditions, the sub battery 60 is electrically separated from the battery 50. The sub battery 60 is used while separating a battery cell in the battery 50. FIG. 5 shows a flow chart of battery management processes using the sub battery 60. The same signs as in FIG. 3 are put to the same processes as the flow chart in FIG. 3. As is clear from a comparison between FIG. 3 and FIG. 5, in a case of the second embodiment, a step S15 and a step S 17 are added.

In a case of separating the anomaly battery cell, the controller 12 first turns on the switch 62 and connects the sub battery 60 in parallel with the battery 50 (S15). Next, the controller 12 electrically separates the anomaly battery cell (S6). Then, the controller 12 turns off the switch 62 to separate the sub battery 60. While the anomaly battery cell is separated, the sub battery 60 is connected in parallel with the battery 50, and the sub battery 60 compensates for the temporary voltage decrease accompanied by the separation of the anomaly battery cell.

Other points to be noted regarding the assist devices in the first and second embodiments will be remarked. The assist devices in the embodiments use the ground contact sensor 38 attached to the sound leg, and change the battery for supplying electric power for the actuator while the sound leg is making contact with the ground (that is, during the period other than the one leg standing period of the wearing leg). The assist devices may use the ground contact sensor 32 of the wearing leg instead of the ground contact sensor 38 of the sound leg. In this case, the assist devices may change the battery during the idling leg period of the wearing leg. The electric power which the motor is required to provide is small during the idling leg period of the wearing leg. Therefore, the voltage decrease caused by changing the battery during the idling leg period does not degrade the capability of the assist devices.

Since a walking action is a periodic action, it is possible to estimate the "period in which the sound leg is making contact with the ground" or the "idling leg period of the wearing leg" from a change of an angle of a joint of a leg over time (a walking pattern). It is also possible to estimate the "period in which the sound leg is making contact with the ground" or the "idling leg period of the wearing leg" from an electric power consumption of the motor. The assist device may estimate the "period in which the sound leg is making contact with the ground" (or the "idling leg period of the wearing leg") from the angle of the joint of the leg or the electric power consumption of the motor, and then change the battery during the period estimated.

The assist device has two independent batteries (the first battery and the second battery) and is configured to change the power source of the actuator from the first battery to the second battery during the period in which the sound leg is making contact with ground (or the idling leg period of the wearing leg).

Specific examples of the present invention are described above in detail, but these merely illustrate some possibilities of the teachings and do not restrict the scope of the claims. The art set forth in the claims includes variations and modifications of the specific examples set forth above.

### Reference Signs List

10: leg attachment
12: controller
20: upper leg link
25: first joint
26: motor (actuator)
27: angle sensor
30: lower leg link
32, 38: ground contact sensor
34: second joint
36: foot link
50: battery
51a, 51b, 51c: battery cell
52a, 52b, 52c, 62: switch
53a, 53b, 53c: bypass
54a, 54b, 54c: anomaly detector
60: sub battery
100: walking assist device

## Claims

1. A walking assist device (100) for assisting a user having a sound leg (UL) and a wearing leg (UR), the walking assist device comprising:
a leg attachment (10) in use attached to the wearing leg, and having an actuator (26) for applying torque on a joint of the wearing leg;
a first and a second battery configured to supply electric power to the actuator; and
a controller (12) configured to change a power source of the actuator from the first battery to the second battery while the sound leg is making contact with ground.

2. The walking assist device according to claim 1, wherein:
the first battery is configured by connecting a plurality of battery cells; and
the second battery corresponds to a battery in which at least one battery cell in the plurality of battery cells is electrically separated from the first battery.

3. The walking assist device according to claim 2, further comprising a third battery that is independent of the first and the second batteries, wherein:
the controller connects the third battery to the actuator while changing the power source of the actuator from the first battery to the second battery.

## Patentansprüche

1. Gehhilfevorrichtung (100), zum Unterstützen eines Nutzers, der ein intaktes Bein (UL) und ein tragendes Bein (UR) hat, wobei die Gehhilfevorrichtung Folgendes aufweist:
ein Beinanbauteil (10), das im Einsatz an dem tragenden Bein angebracht ist und ein Betätigungselement (26) zum Ausüben eines Drehmoments auf ein Gelenk des tragenden Beins hat;
eine erste und eine zweite Batterie, die eingerichtet sind, um das Betätigungselement mit elektrischer Energie zu versorgen; und
eine Steuereinrichtung (12), die eingerichtet ist, um eine Energiequelle des Betätigungselements von der ersten Batterie zu der zweiten Batterie umzuschalten, während das intakte Bein mit dem Boden in Berührung ist.

2. Gehhilfevorrichtung nach Anspruch 1, wobei
die erste Batterie durch Verbinden einer Vielzahl von Batteriezellen gestaltet ist; und
die zweite Batterie einer Batterie entspricht, in der mindestens eine Batteriezelle der Vielzahl von Batteriezellen elektrisch von der ersten Batterie isoliert ist.

3. Gehhilfevorrichtung nach Anspruch 2, ferner mit einer dritten Batterie, die unabhängig von der ersten und der zweiten Batterie ist, wobei
die Steuereinrichtung die dritte Batterie mit dem Betätigungselement verbindet, während sie die Energiequelle des Betätigungselements von der ersten Batterie zu der zweiten Batterie um schaltet.

## Revendications

1. Dispositif d'aide à la marche (100) pour aider un utilisateur ayant une jambe saine (UL) et une jambe équipée (UR), le dispositif d'aide à la marche comprenant :
une fixation de jambe (10) fixée en utilisation sur la jambe équipée, et comportant un actionneur (26) pour appliquer un couple sur un joint de la jambe équipée ;
une première et une seconde batteries configurées pour alimenter en courant électrique l'actionneur ; et
une commande (12) configurée pour changer une source de courant de l'actionneur de la première batterie à la seconde batterie quand la jambe saine établit un contact avec le sol.

2. Dispositif d'aide à la marche selon la revendication 1, dans lequel :
la première batterie est configurée en connectant une pluralité de cellules de batterie ; et
la seconde batterie correspond à une batterie dans laquelle au moins une cellule de batterie dans la pluralité de cellules de batterie est séparée électriquement de la première batterie.

3. Dispositif d'aide à la marche selon la revendication 2, comprenant en outre une troisième batterie qui est indépendante de la première et de la seconde batteries, dans lequel :
la commande connecte la troisième batterie à l'actionneur tout en changeant la source de courant de l'actionneur de la première batterie à la seconde batterie.
